# EUROPEAN PATENT APPLICATION

(11) **EP 2 533 384 A1**
(43) Date of publication of application: **12.12.2012**
(21) Application number: 11169101.0
(22) Date of filing: 08.06.2011
(51) Int. Cl.: H02G 3/22, H02G 15/013, F16L 3/22, G02B 6/44

(54) **Tubing spacer and method of using a tubing spacer**

(71) Applicant: Tyco Electronics Raychem BVBA, 3010 Kessel-Lo (BE)
(72) Inventor: Kempeneers, Dirk, 3200 Aarschot (BE); Bryon, Roel Modest Willy, 3200 Aarschot (BE); Foulon, Wouter, 3000 Leuven (BE)
(74) Representative: Obst, Bernhard

(57) **Abstract**

A sealing device (100) for sealing a duct (10) with inner tubes (14) to an enclosure (16) includes a housing (40, 440) having a body (102) defining a tubular shape extending between a first end (104, 442) and a second end (106, 444). Snaps (42, 446) at the first end (104, 442) snap at the housing (40, 440) to a telecommunications port (18). Tabs (110) at the second end (106, 444) engage corrugations (12) on a duct (10) mounted to the second end (106, 444) of the housing (40, 440). The housing (40, 440) receives tubes (14), such as blown fiber tubes for receipt of fibers during blown fiber installation processes. The housing (40, 440) defines a chamber (28) for receiving resin which seals around the tubes (14). Once the resin hardens, the snaps (42, 441) can no longer be moved, thereby preventing the housing (40, 440) from being removed from the telecommunications device. A lower tube holder (30, 430) is provided for organizing the tubes (14) adjacent to the second end (106, 444) of the housing (40, 440). An upper tube holder (50, 350, 450) is provided for organizing the tubes (14) adjacent to the first end (104, 442) of the housing (40, 440). The upper tube holder (50, 350, 450) defines a center passage (320) for receipt of poured resin. (FIG. 2)

## Description

### Field of the Invention

The present invention relates to devices and methods for mounting tubes to telecommunications enclosures.

### Background of the Invention

Cables enter telecommunications boxes, enclosures, or other devices through ports or other openings. Some telecommunications systems include tubes which are passed into the telecommunications devices for later use in installation of fibers through the tubes in an air blown fiber installation process. Typically, these tubes are provided within a conduit or duct. There is a need to seal the area around the port relative to the conduit and the tubes to protect the interior of the telecommunications device. It is known to use blocking material around the tubes to seal and protect the interior of the telecommunications devices. There is a need for devices and methods which simplify installation of the tubes and results in a good seal relative to the interior of the telecommunications device.

### Summary of the Invention

One aspect of the invention relates to a tube holder for organizing tubes extending into a telecommunications device from a duct. The tube holder includes a base and openings for receipt of the tubes. In one embodiment, the openings are formed with side access to allow the tubes to be received in the openings from the side, or by axially sliding the upper tube holder along the tubes from an end of the tubes.

The tube holder is positionable in a housing to organize tubes extending from the housing. The tube holder also defines a central passage for receipt of poured resin to seal around the tubes.

In one embodiment, the tube holder defines a quarter shape, requiring four upper tube holders to fill a circular opening in a housing which mounts a duct to a telecommunications device.

In one preferred embodiment, the tube holder includes an air vent hole.

In one preferred embodiment, the tube holder includes a center passage for receipt of poured resin when positioned adjacent to an upper end of the housing while the tubes are maintained in the tube openings.

In one preferred embodiment, the tube holder includes side projections which slideably mate with slots on the housing through axially movement.

In another embodiment, the tube holder is formed with tube openings which are closed openings and do not have side access, and wherein the tube holder is quarter shaped.

In a further embodiment, the tube holder is integrally formed as a generally circular disk including tube openings, one or more vent holes, and a center passage for receipt of poured resin for receipt in the housing. The circular upper tube holder includes side projections for axial engagement with slots of the housing.

A further aspect of the present invention relates to a method of using a tube holder extending from a duct, wherein a housing is mounted around the end of the duct with the tubes passing through the housing. The tube holder is positioned adjacent to an upper portion of the housing. Resin is poured through a center of the tube holder around the tubes within the housing.

### Brief Description of the Figures

FIG. 1 is a perspective view of a duct including tubes entering an enclosure and held in place with a sealing device;
FIG. 2 is an exploded view of the system of FIG. 1;
FIG. 3 is a perspective view of a lower tube holder of the sealing device;
FIG. 4 is a further perspective view of the lower tube holder;
FIG. 5 is a first side view of the lower tube holder;
FIG. 6 is a further side view of the lower tube holder;
FIG. 7 is a top view of the lower tube holder;
FIG. 8 is a bottom view of the lower tube holder;
FIG. 9 is a perspective view of a housing of the sealing device;
FIG. 10 is a further perspective view of the housing;
FIG. 11 is a side view of the housing;
FIG. 12 is a further side view of the housing;
FIG. 13 is a further perspective view of the housing;
FIG. 14 is a top view of the housing;
FIG. 15 is a bottom view of the housing;
FIG. 16 is a perspective view of an upper tube holder of the sealing device;
FIG. 17 is a further perspective view of the upper tube holder;
FIG. 18 is a further perspective view of the upper tube holder;
FIG. 19 is a side view of the upper tube holder;
FIG. 20 is a top view of the upper tube holder;
FIG. 21 shows four of the upper tube holders in position during use in the upper area of the housing;
FIG. 22 is a perspective view of an alternative embodiment of an upper tube holder;
FIG. 23 is a side view of the upper tube holder of FIG. 22;
FIG. 24 is a top view of the upper tube holder of FIG. 22;
FIG. 25 shows the duct including corrugations and tubes prior to installation of the sealing device;
FIG. 26 shows the lower tube holder mounted to the duct over the tubes;
FIG. 27 shows the alignment of the housing with the lower tube holder and the duct prior to connection;
FIG. 28 shows the housing partially positioned over the lower tube holder prior to locking engagement;
FIG. 29 is a cross-sectional view showing the housing locked to the lower tube holder on the duct;
FIG. 30 is a cross-sectional view showing the housing, the lower tube holder, and the duct snapped to the enclosure;
FIG. 31 shows one of the upper tube holders being inserted over three of the tubes;
FIG. 32 shows the upper tube holder in position over the three tubes and engaged with the housing;
FIG. 33 shows the relative positions of the lower tube holder and the upper tube holder, without the housing to illustrate the resin receiving area;
FIG. 34 shows a top view of the sealing device with the tubes organized and a central passage defined for receiving the resin;
FIG. 35 shows a top view of the lower tube holder organizing the tubes for receipt of the resin;
FIG. 36 is a perspective view of an alternative embodiment of a sealing device;
FIG. 37 is a bottom view of the lower tube holder of FIG. 36;
FIG. 38 is a perspective view of the housing of FIG. 36;
FIG. 39 is a top view of the housing of FIG. 36;
FIG. 40 is a cross-sectional perspective view of the housing of FIG. 38;
FIG. 41 is a further perspective view of one of the upper tube holders of FIG. 36;
FIG. 42 is a top view of the upper tube holder of FIG. 41.

### Detailed Description of the Preferred Embodiments

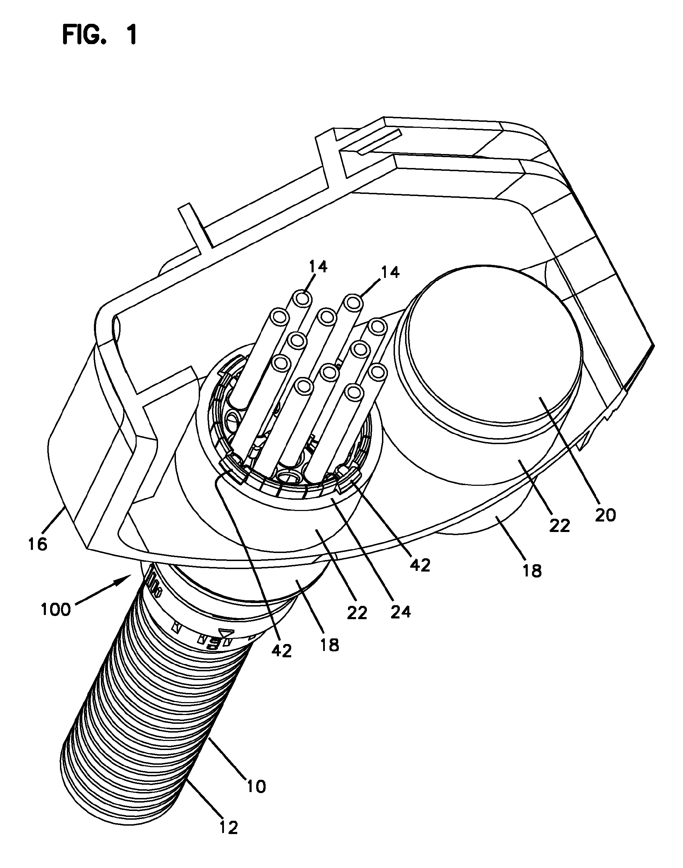

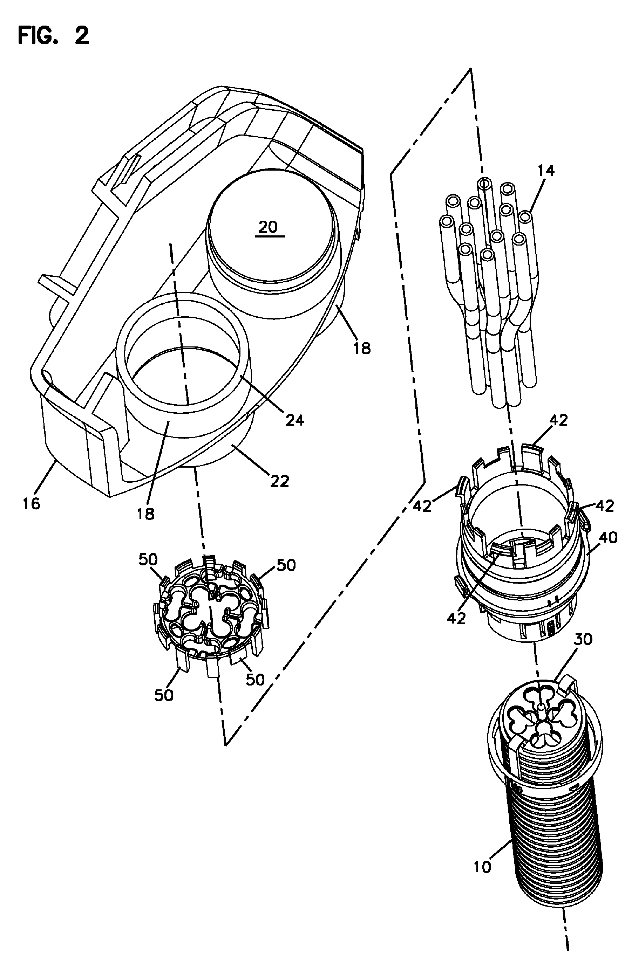

Referring now to FIGS. 1 and 2, a sealing device 100 is shown for connecting a duct 10 to a telecommunications enclosure 16. Enclosure 16 is only partially shown and can take many forms. Enclosure 16 may include telecommunications equipment, such as splices, splitters, terminations, and wave division multiplexers.

Duct 10 includes tubes 14 in the interior of duct 10. Tubes 14 are used to receive fibers, such as air blown fibers where air is used to install the fibers within the tubes 14. Enclosure 16 includes a port 18 through which tubes 14 enter. Port 18 can be initially closed with a cap 20, or other sealing device. Port 18 includes a tubular sleeve 22, including a top edge 24. Sealing device 100 receives poured resin for sealing around tubes 14 within sealing device 100 to thereby seal enclosure 16 from weather or other intrusive elements, such as dust, insects, or rodents. Enclosure 16 can be used with blown fiber technology or one or more cables or fibers of cables extended to the enclosures such as in fiber to the home or other premises. In the case of blown fibers, duct 10 contains the blown fiber tubes 14 connected to port 20 with sealing device 100.

Duct 10 is flexible and of a conventional design, and includes corrugations 12. Sealing device 100 connects duct 10 to enclosure 16. In the preferred arrangement, sealing device 100 snap mounts to port 18 during installation, and is prevented from removal, after installation as will be discussed below.

Sealing device 100 includes a housing 40 with upper flexible snaps 42 which move inwardly to then snap fit housing 40 to top edge 24 of tubular sleeve 22 after insertion. Sealing device 100 in the preferred embodiment further includes a lower tube holder 30 which organizes tubes 14 extending from duct 10 into housing 40. In the preferred embodiment, an upper tube holder 50 is provided to also organize tubes 14 exiting housing 40 and cooperates with lower tube holder 30 to define a chamber 28 for resin poured into the chamber to seal around tubes 14. Once the resin is hardened, snaps 42 are no longer moveable to unsnap housing 40 from port 18.

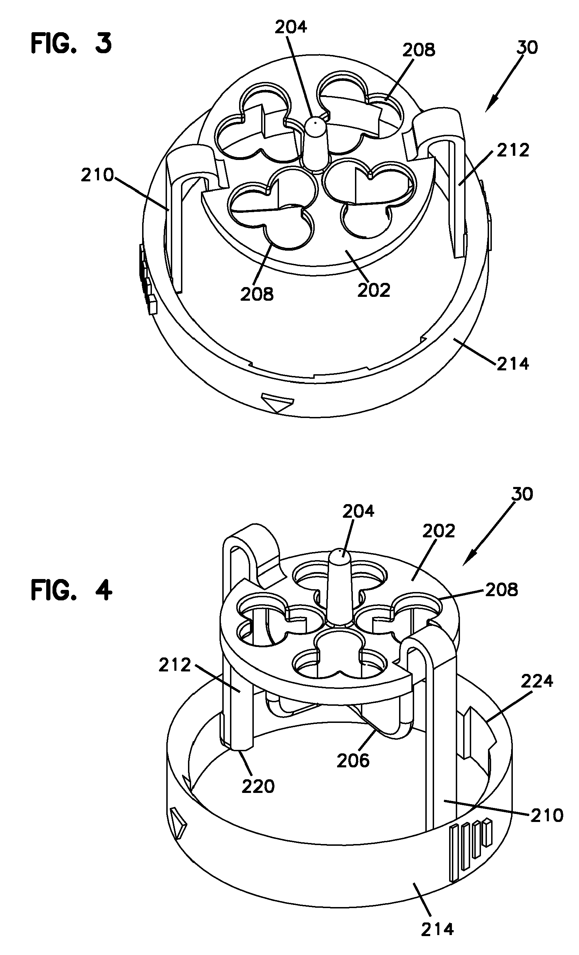

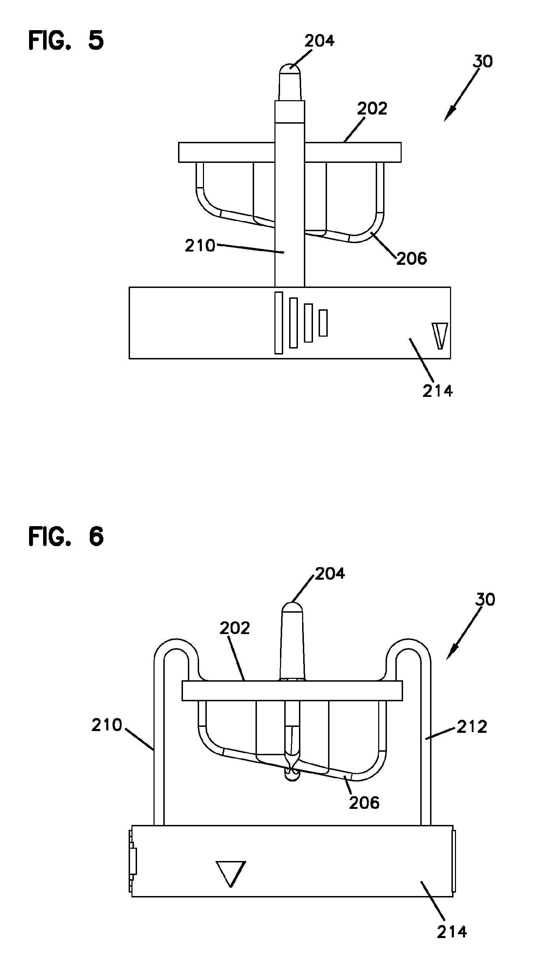

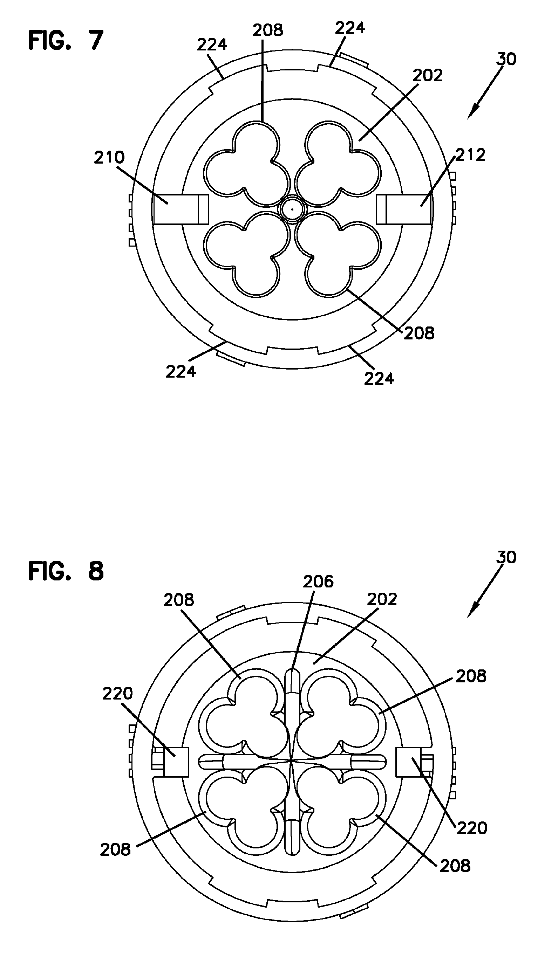

Referring to Figs. 3-8, lower tube holder 30 includes a base 202 with an axially centered center post 204 extending upwardly, and a lower divider 206. Holes 208 are provided through base 202 for receipt of tubes 14. In the illustrated embodiment, four holes are provided. As shown, holes 208 are tri-lobbed and hold three tubes per hole. Holes 208 are positioned equidistant around a center axis defined by center post 204. More or less holes 208, or different shapes can be provided.

Lower tube holder 30 includes side arms 210, 212 connected to an outer ring 214. Ends 220 of side arms 210, 212 include a ramped surface 220 as will be further explained below. Divider 206 has an angled lower end to facilitate insertion into an end of duct 10.

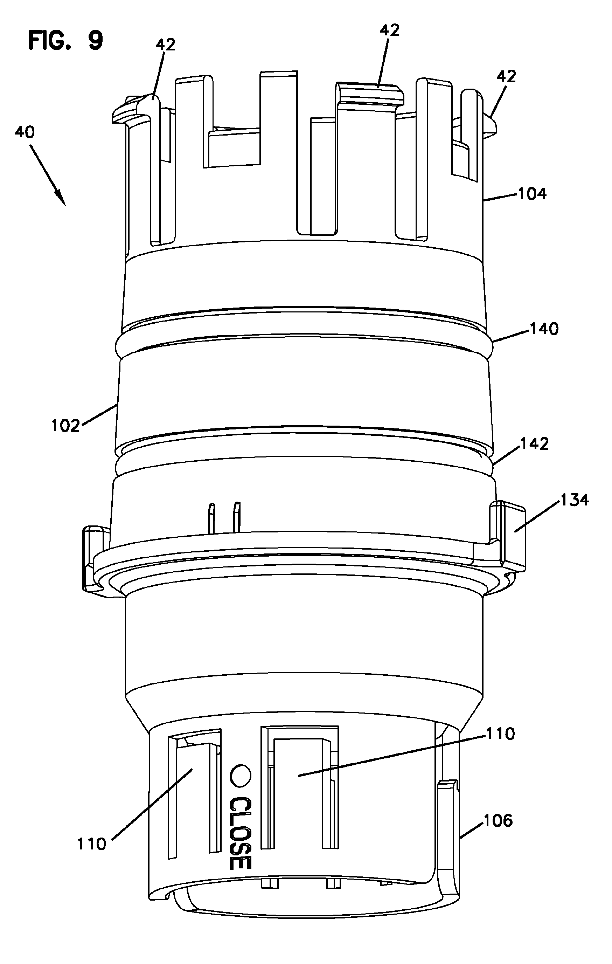

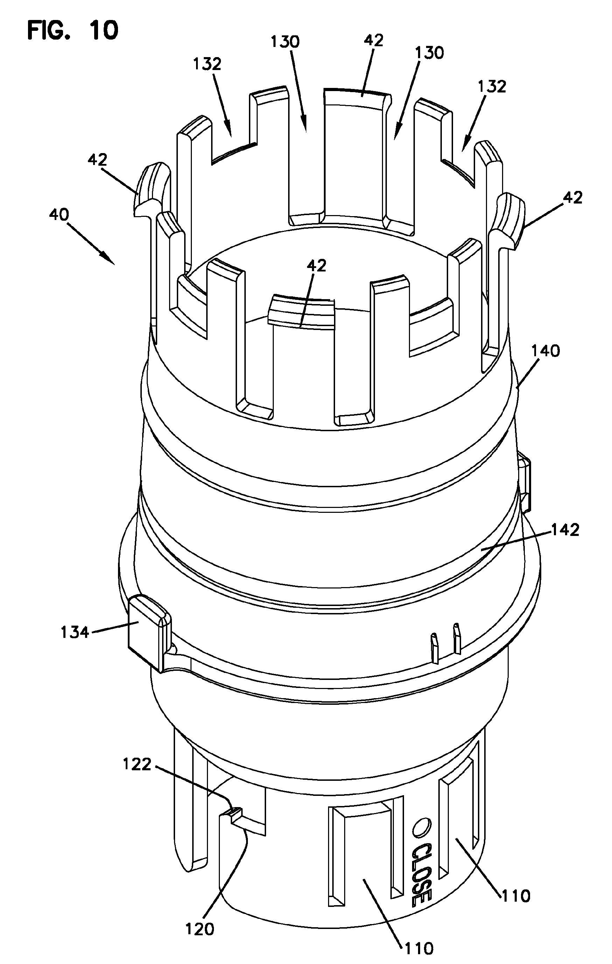

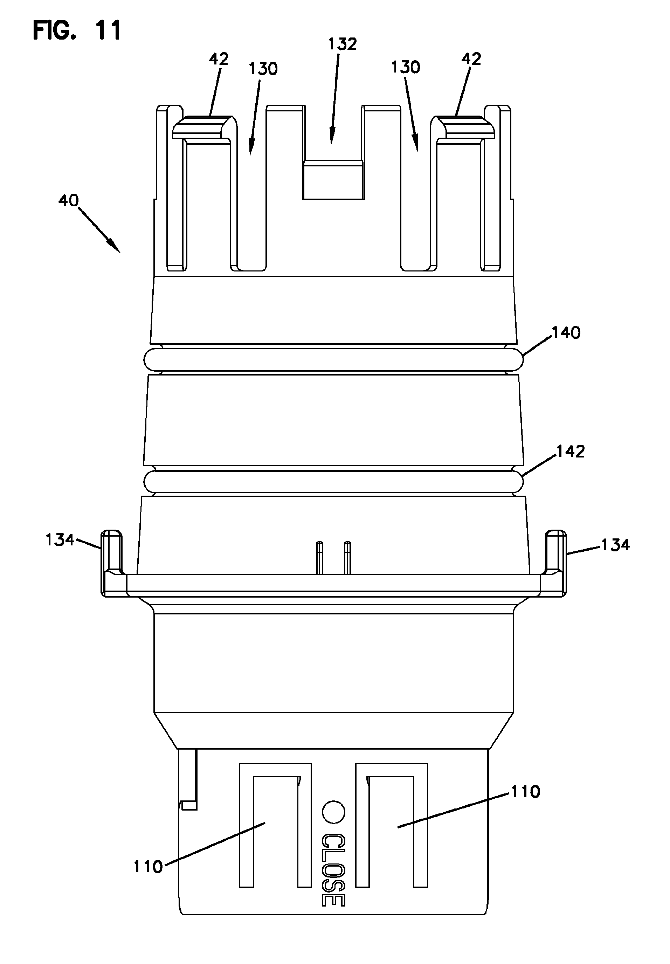

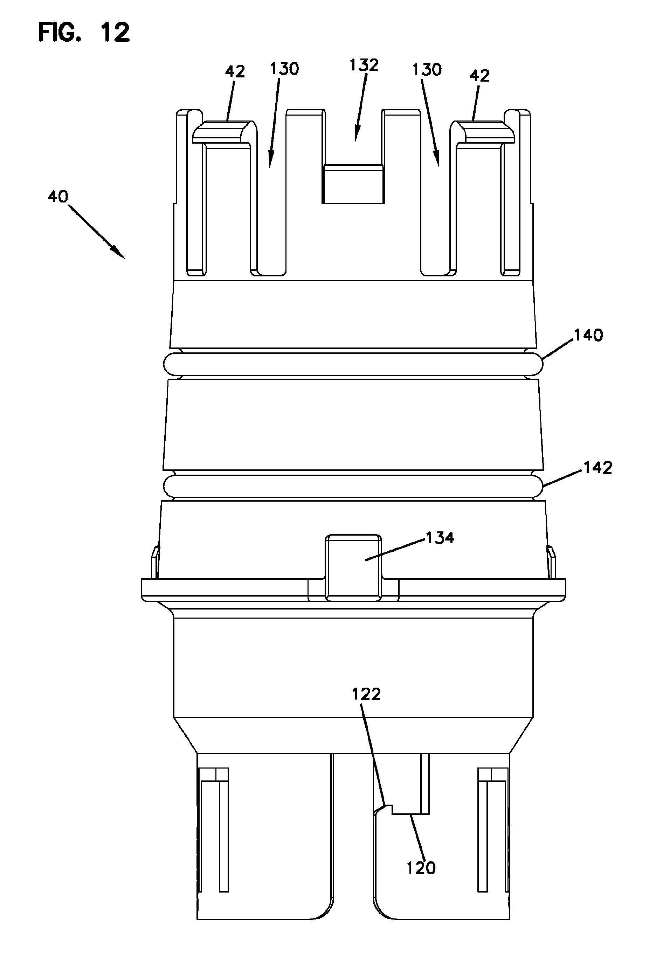

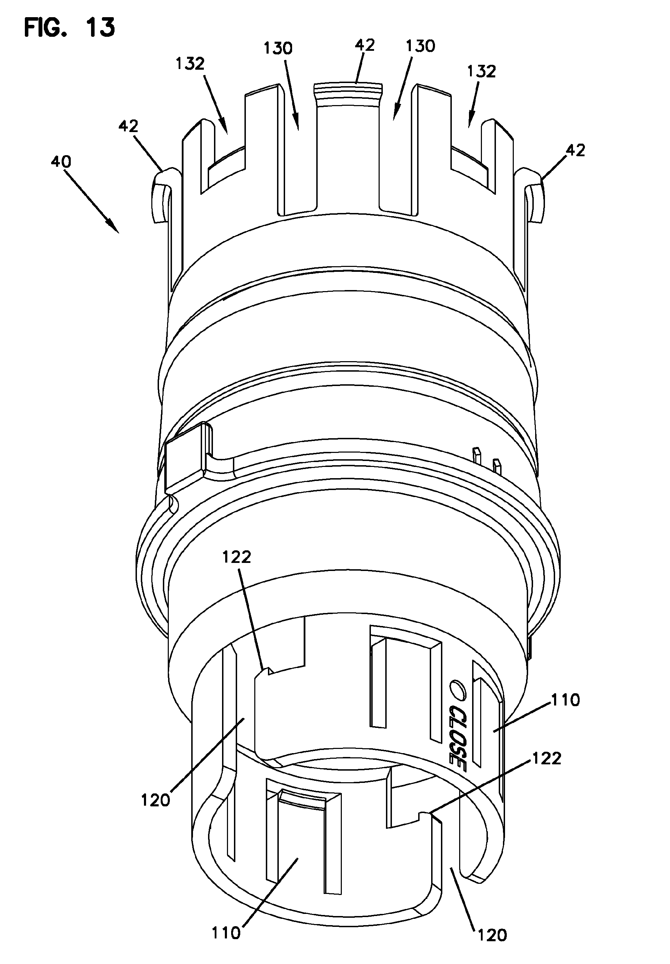

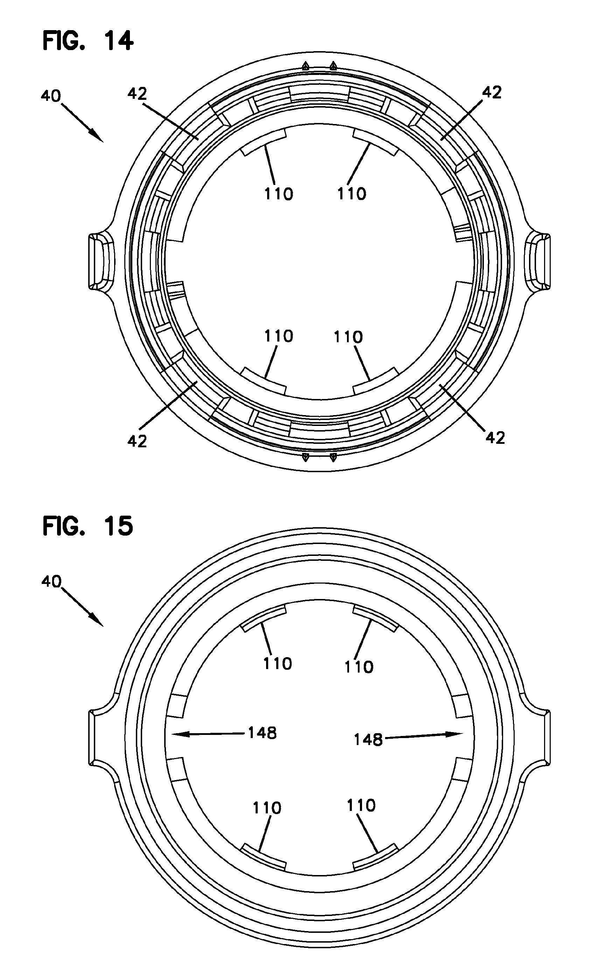

Referring now to Figs. 9-15, housing 40 includes a body 102 defining a generally tubular shape extending between a first end 104 and a second end 106. Snaps 42 are positioned at first end 104. Flexible ramped tabs 110 are positioned adjacent to second end 106. Locking slots 120 in the form of L-shapes are also positioned adjacent to second end 106. L-shaped locking slots 120 receive side arms 210, 212 of lower tube holder 30 first with axially sliding motion, and ramped surfaces 220 rotate into slots 120 past detents 122 to lock housing 40 to lower tube holder 30 with relative rotation of the two parts. Once locked, tabs 110 are engaged with corrugations 12 of duct 10, tabs 110 cannot flex outward due to outer ring 214 of lower tube holder 13.

Housing 40 includes outer tabs 134 for gripping. Seals 140, 142 seal housing in port 18. Vertical slots 148 connect to locking slots 120 to allow housing 40 to be slid over lower tube holder 30 and second end 106 into ring 214. Vertical slots 148 receive side arms 210, 212 during assembly.

Notches 224 in ring 214 align with tabs 110 to allow end 106 of housing 40 to slide over base 202 of lower tube holder 30 and into ring 214.

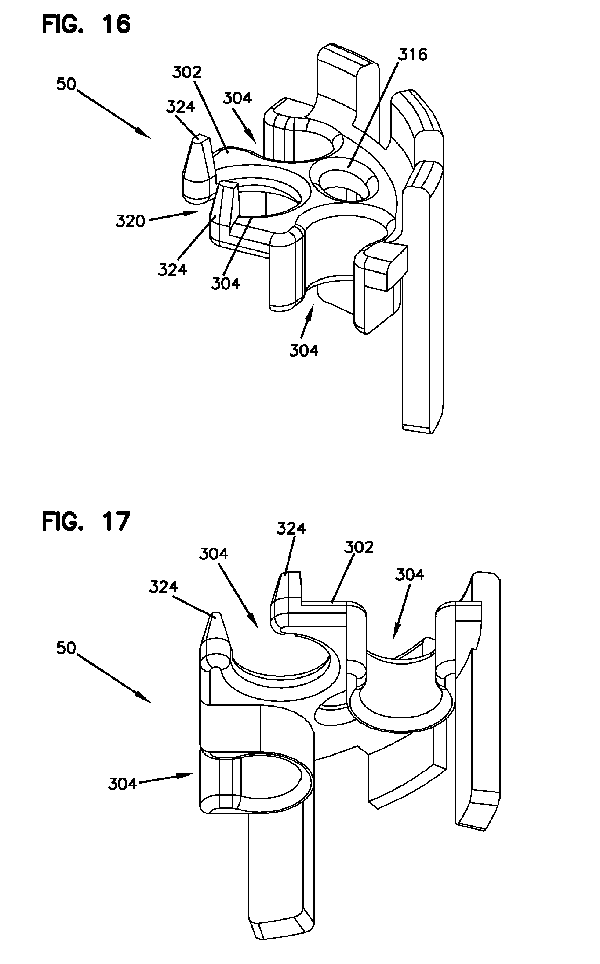

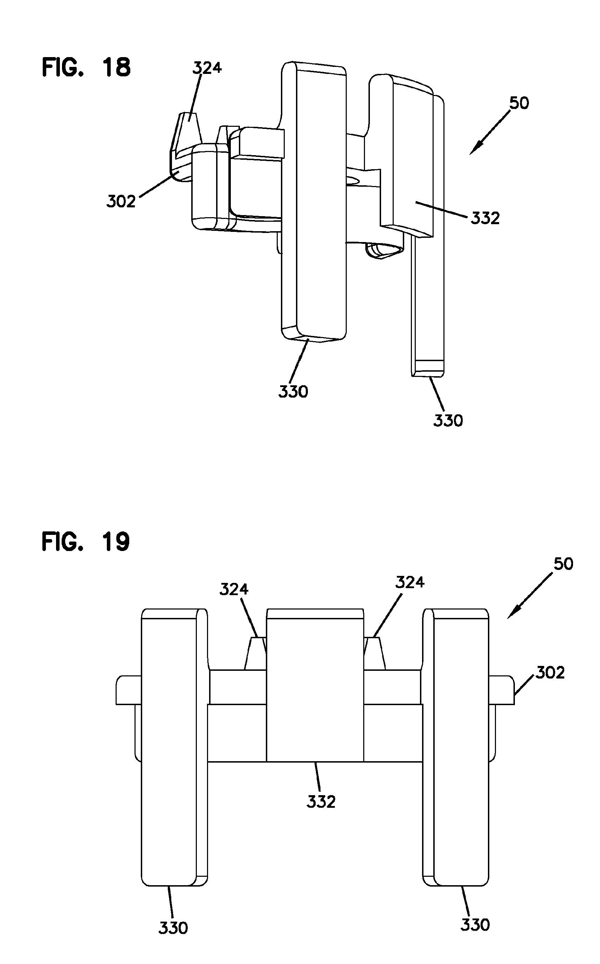

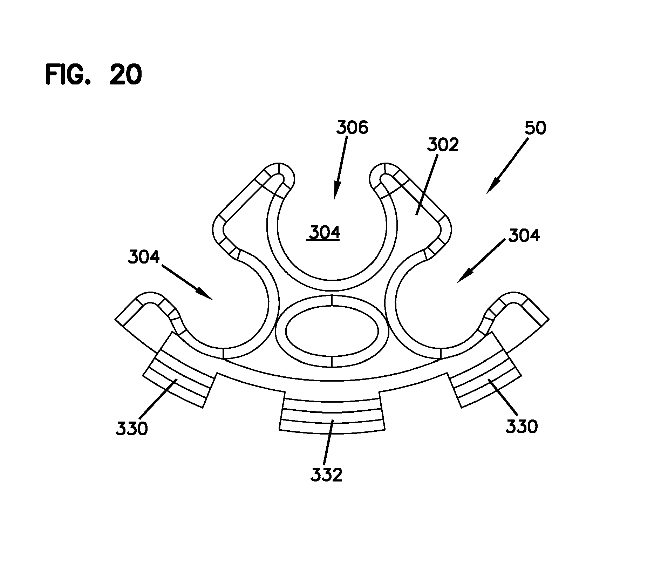

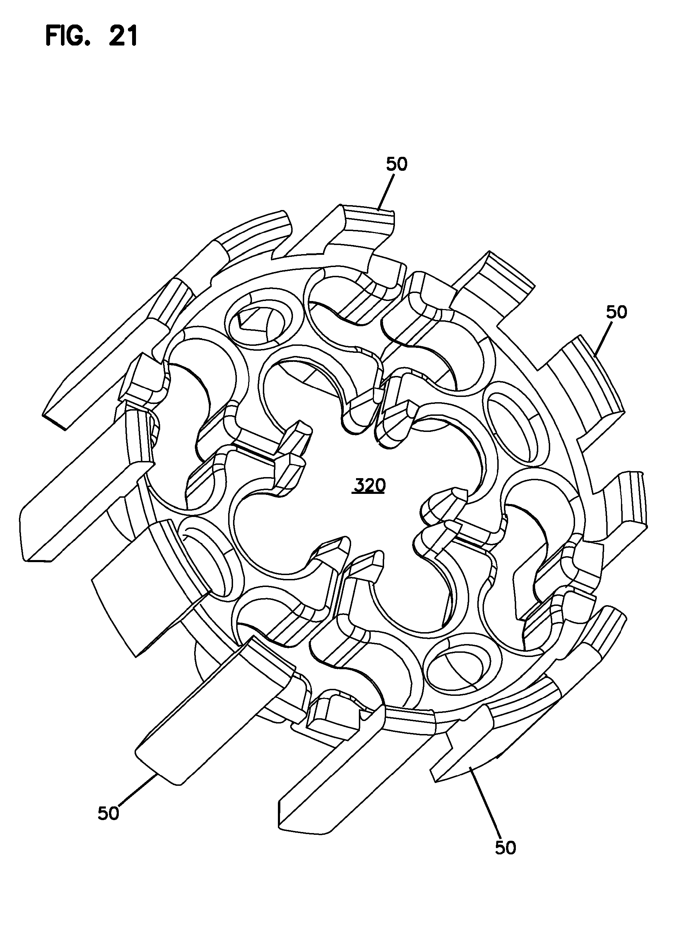

Referring now to Figs. 16-21, upper tube holder 50 includes a base 302 with a plurality of tube openings 304 constructed as side slots for each receiving a tube 14. One tube opening 304 is centrally located, and two others are located on the side of base 302. Upper tube holder 50 is quarter shaped, in that four upper tube holders 50 together form a 360 degree (circular) shape for receipt in first end 104 of housing 40 9see Fig. 21). Upper tube holder 50 includes a vent hole 316 and a center passage 320. Side projections 330, 332 cooperate with the respective upper slots 130, 132 of first end 104 of housing 40 to align and locate the upper tube holders 50 in the proper locations. Center projections 324 form a general ring shape around center passage 320. It is preferred that upper tube holder 50 be pie-shaped, for ease of use. Other shapes, such as one-third, and one-half pie shapes are possible.

Once housing 40 and lower tube holder 30 are snap fit to port 18, the upper tube holders 50 are positioned at the first end 104 of housing 40. Resin (potting agent) is poured in center passage 320. One resin that may be used is a two part resin. The poured resin flows downward toward lower tube holder 30 and center post 204. The resin flows around tubes 14 and fills the area between base 302 of upper tube holder 50 and base 202 of lower tube holder 30. Vent holes 316 allow air to escape from the chamber. Once the resin hardens, snaps 42 cannot be moved radially inwardly to release from top edge 24 of tubular sleeve 22.

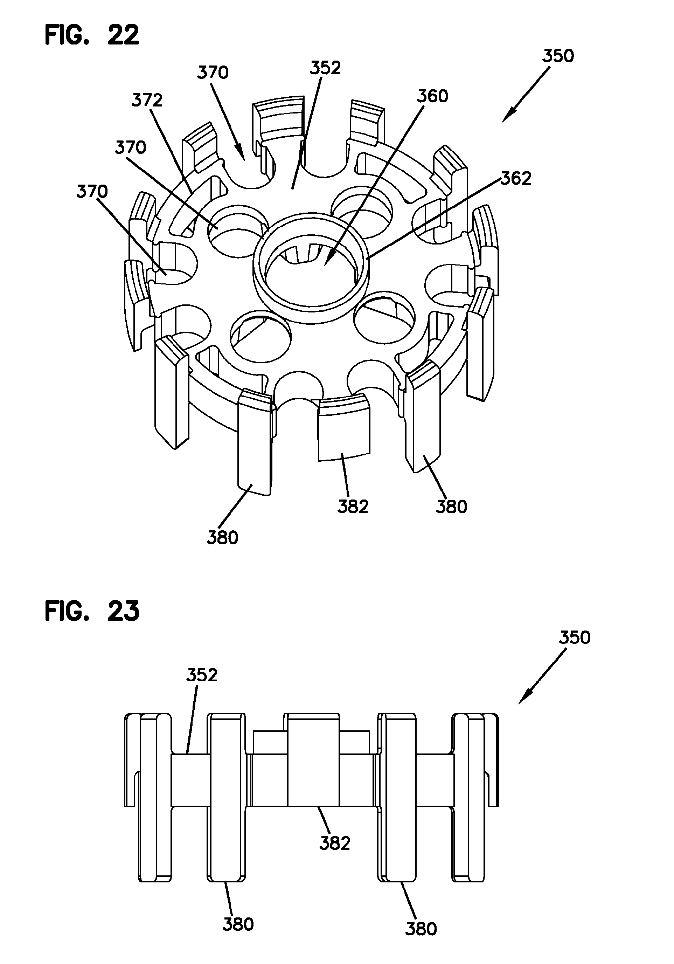

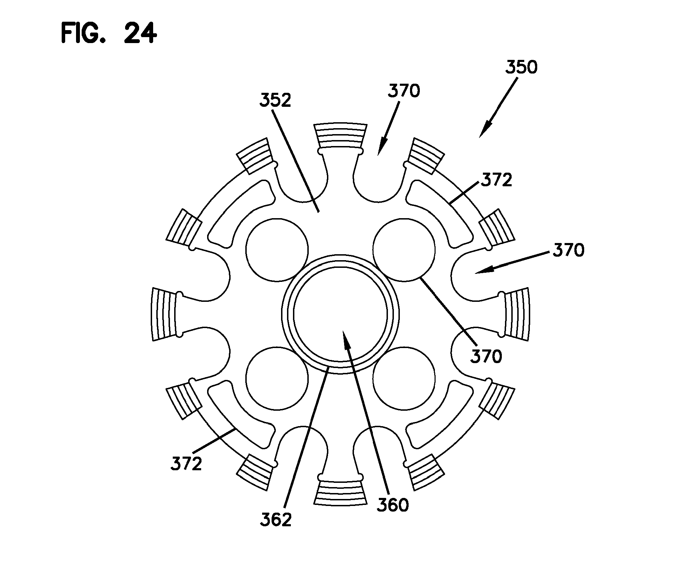

Referring now to FIGS. 22-24, an alternative upper tube holder 350 is shown including a base 352 constructed as a single piece. A center passage 360 is defined inside of central center projection 362. A plurality of tubes holes 370 are provided for passing tubes 14 through and into a holding position. Vent holes 372 are provided for allowing venting of air. Projections 380, 382 cooperate with housing 40 to hold upper tube holder 350 in place.

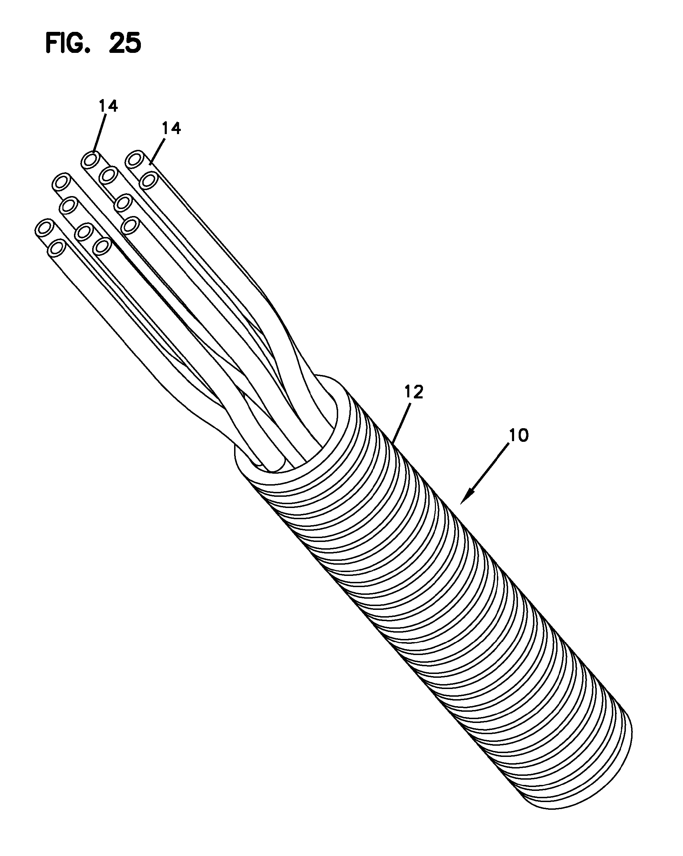

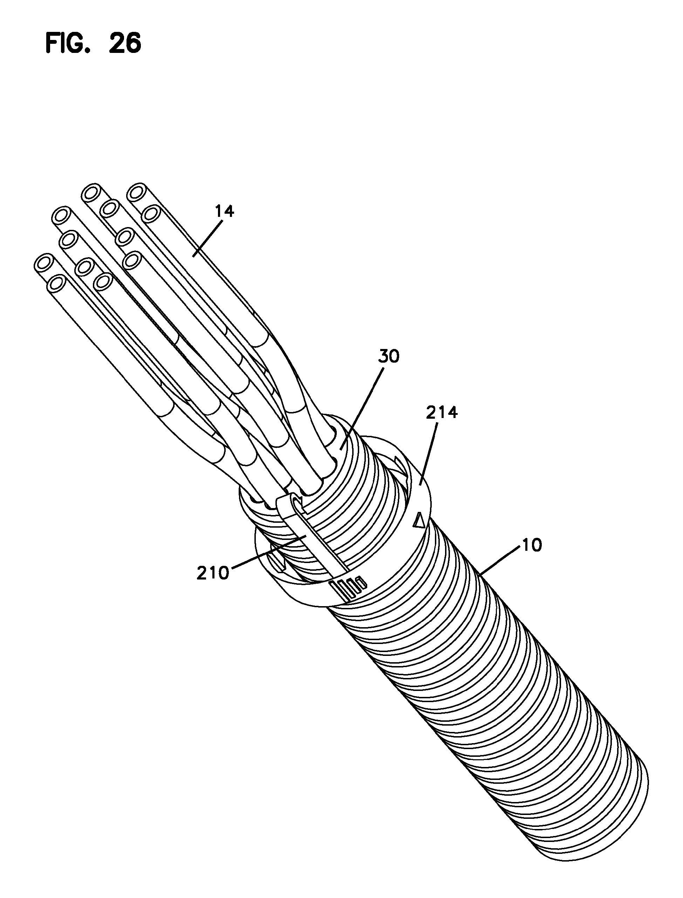

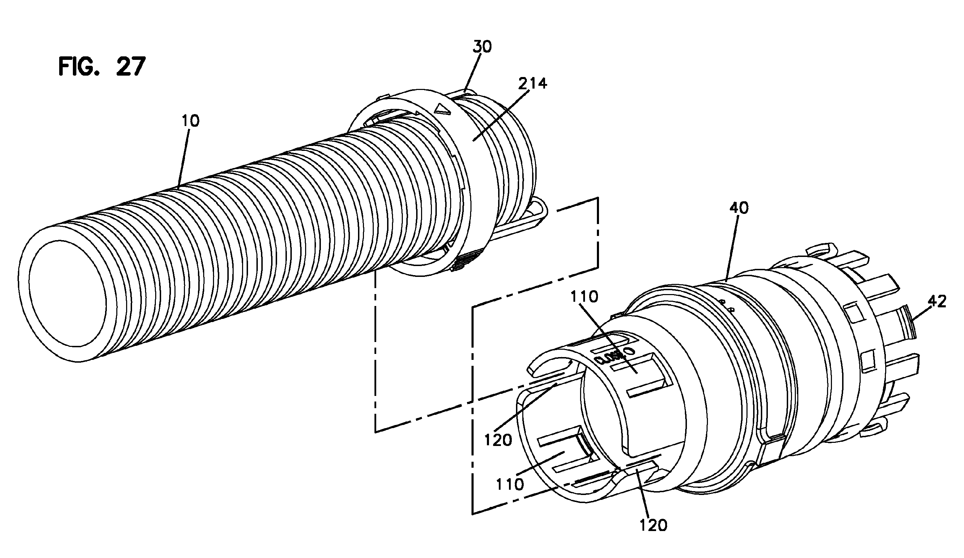

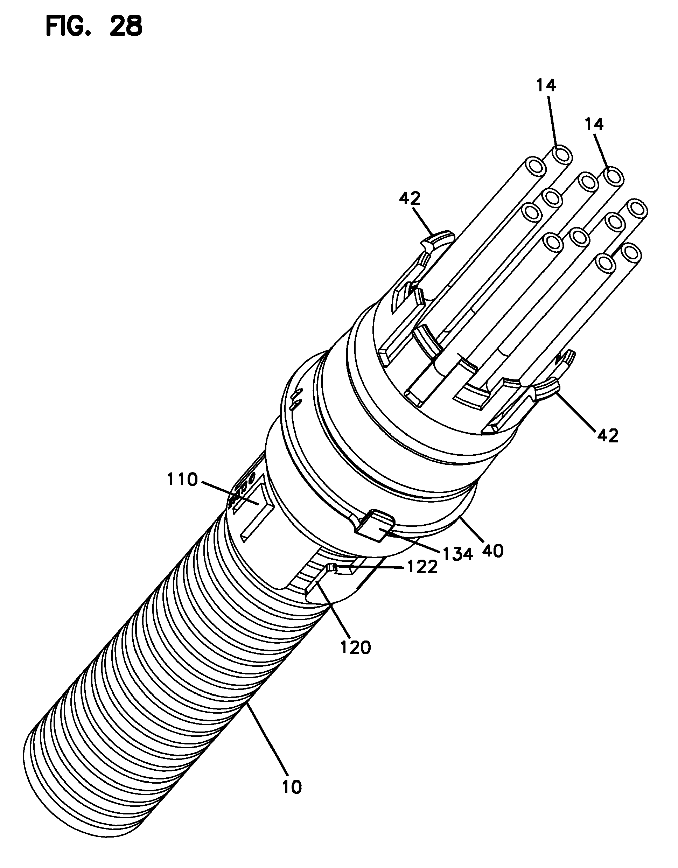

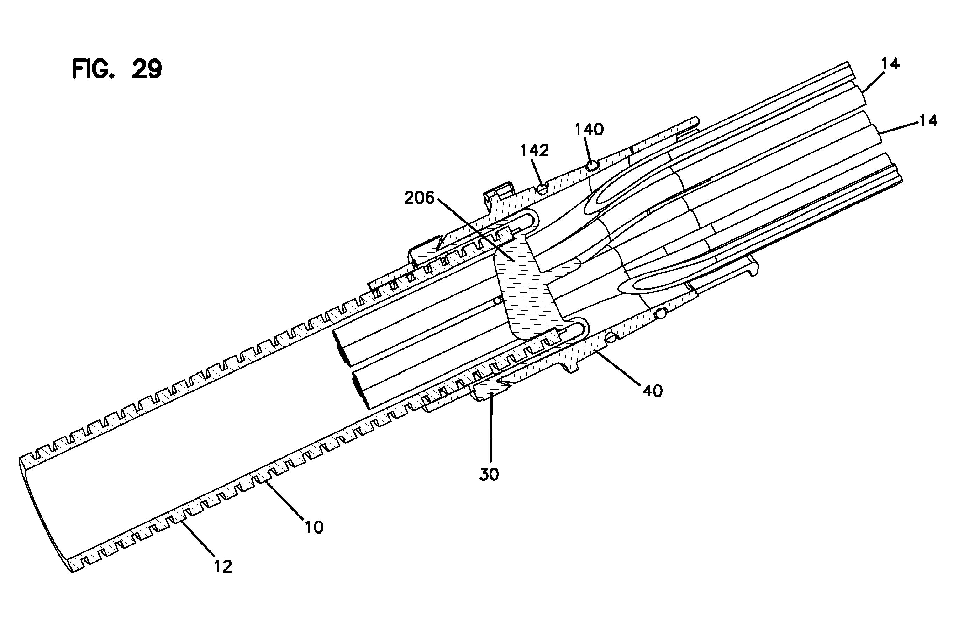

Referring now to Figs. 25-35, sealing device 100 is shown during use. FIG. 25 shows the duct 10 and tubes 14 prior to installation of the sealing device 100. FIG. 26 shows the lower tube holder 30 mounted to the duct 10 over the tubes 14, and holding the tubes in an organized and spaced manner. FIG. 27 shows the alignment of the housing 40 with the lower tube holder 30 and the duct 10 prior to connection. FIG. 28 shows the housing 40 partially positioned with axial movement over the lower tube holder 30 prior to locking engagement. FIG. 29 shows the housing 40 locked to the lower tube holder 30 on the duct 10 following relative rotational movement.

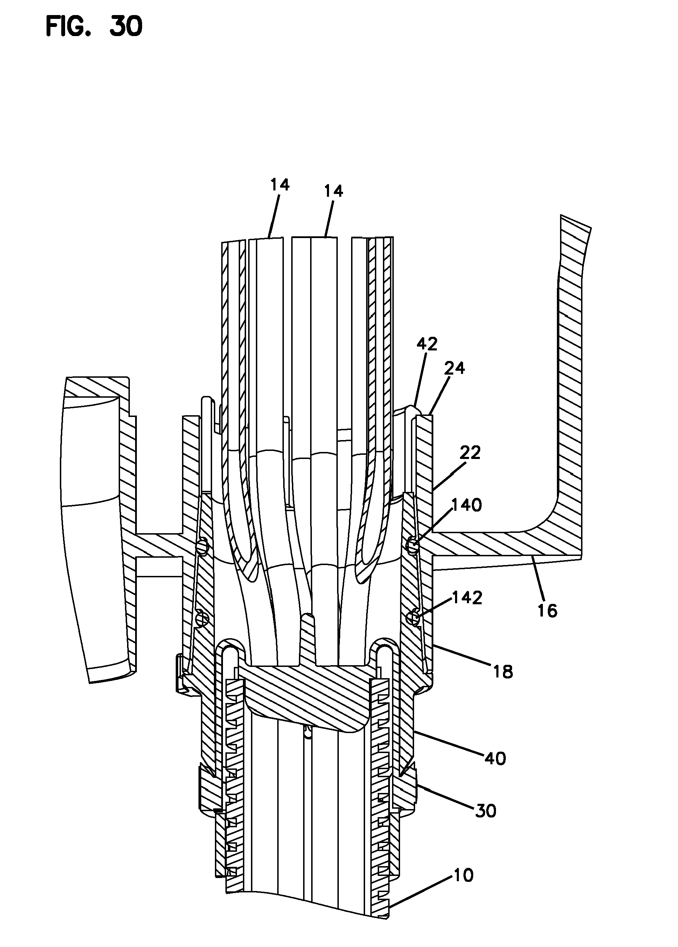

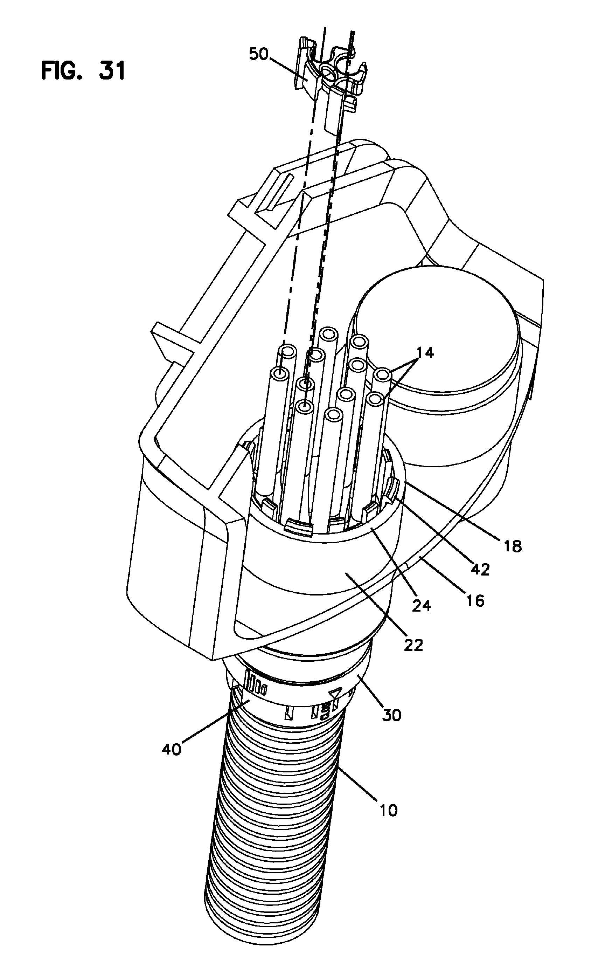

FIG. 30 shows the housing 40 with the attached lower tube holder 30, and the duct 10 snapped to the enclosure tubular sleeve 22 of the 18 of the enclosure 16. FIG. 31 shows one of the quarter shaped upper tube holders 50 being inserted over three of the tubes. It is noted that an operator may find the side entry of holes 304 and the sequentially placing upper tube holder 50 of a few tubes easier than mounting all of the tubes 14 at the same time to a single upper tube holder with closed holes.

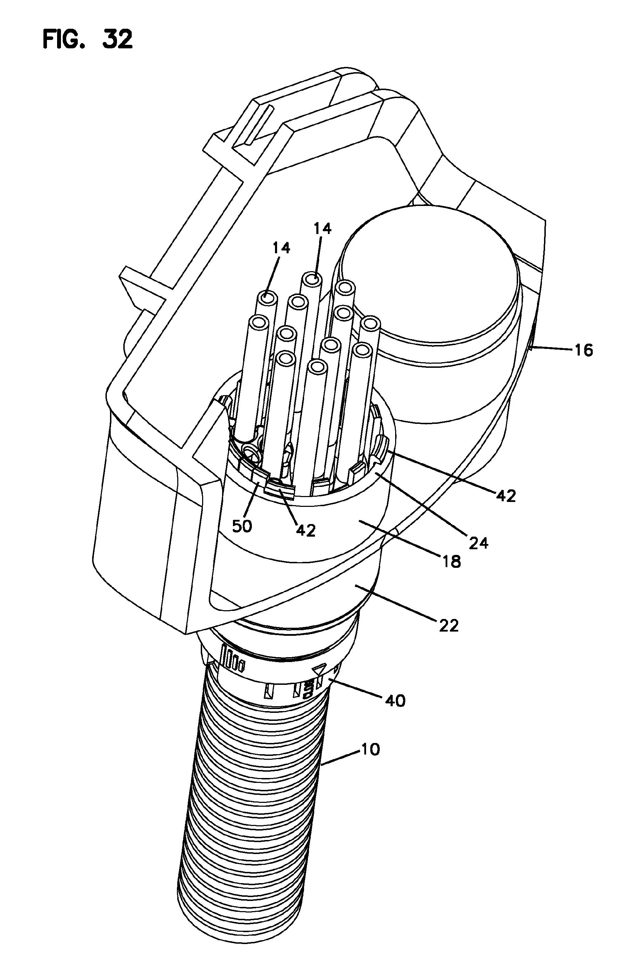

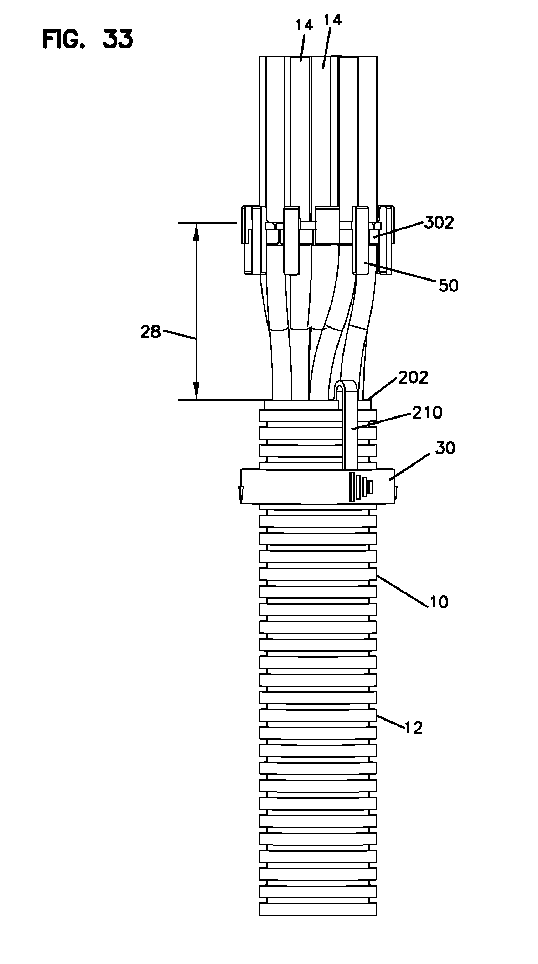

FIG. 32 shows the upper tube holder 50 in position over the three tubes and engaged with the housing, ready for the other three upper tube holders 50 to be installed. FIG. 33 shows the relative positions of the lower tube holder 30 and the upper tube holder 50, without the housing 40 to illustrate the resin receiving area 28.

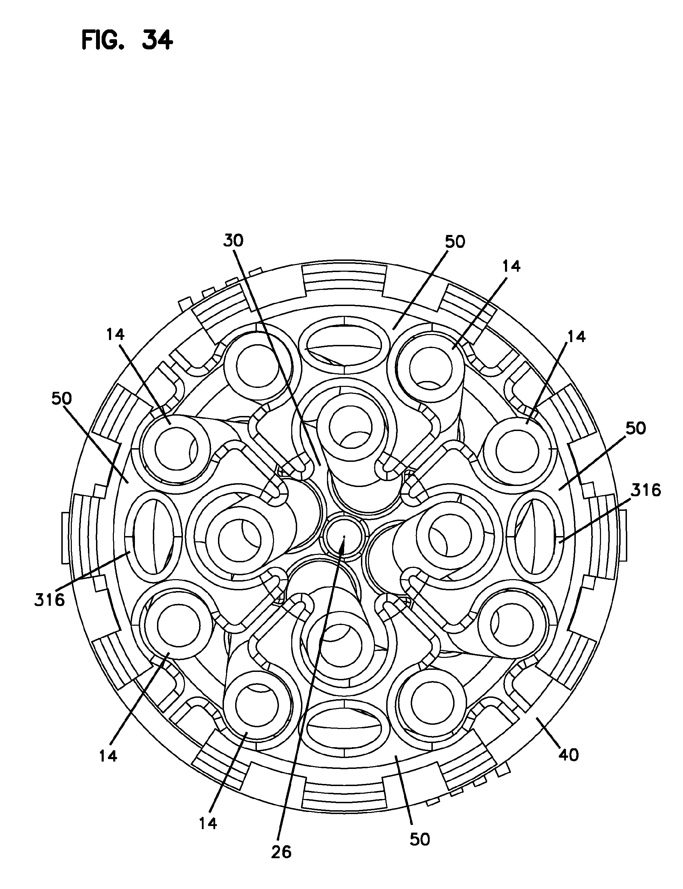

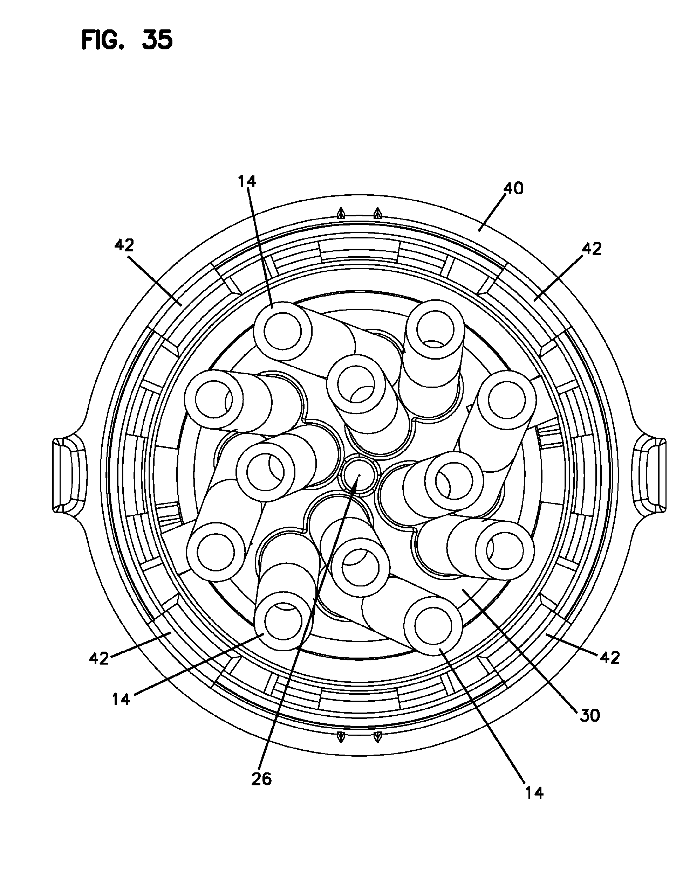

FIG. 34 shows a top view of the sealing device 100 with the tubes 14 organized and a central passage 26 defined for receiving the poured resin. FIG. 35 shows a top view of the lower tube holder 30 organizing the tubes for receipt of the resin. In this manner, sealing device 100 holds the tubes in an organized and spaced manner to promote equal distribution of resin. Further, sealing device 100 promotes containment of the resin in a discrete area, and filling of the resin from the bottom (lower tube holder 30) upward toward, and possibly around upper tube holder 50. Vent holes 316 promote air removal for improved sealing.

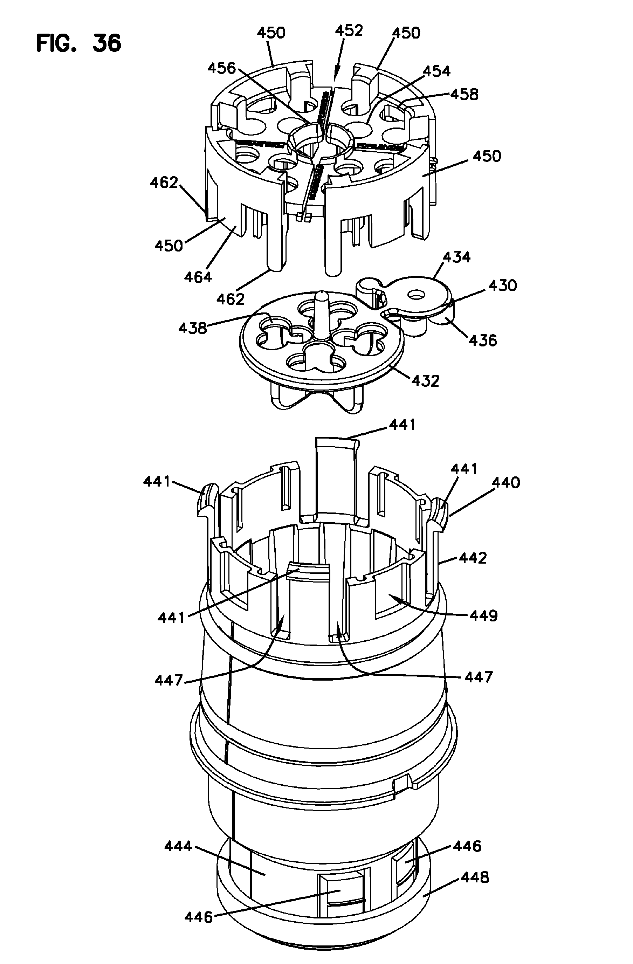

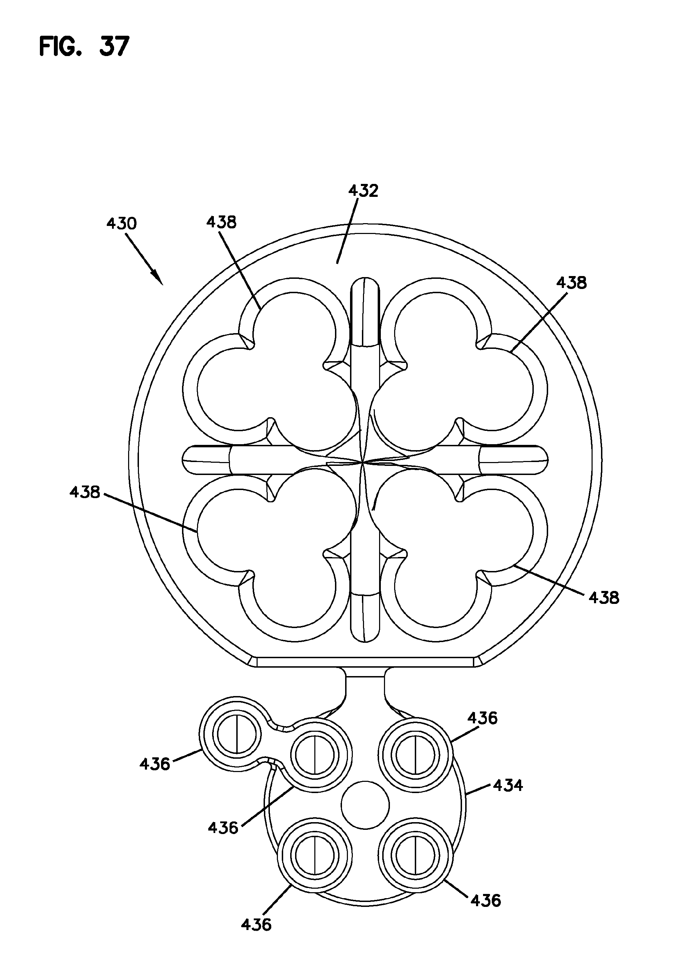

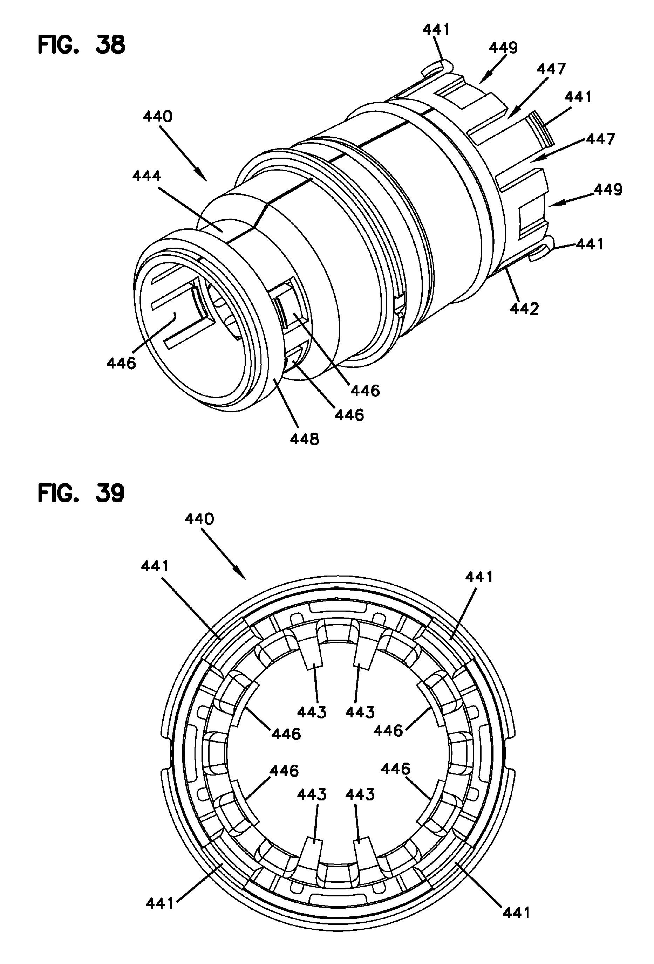

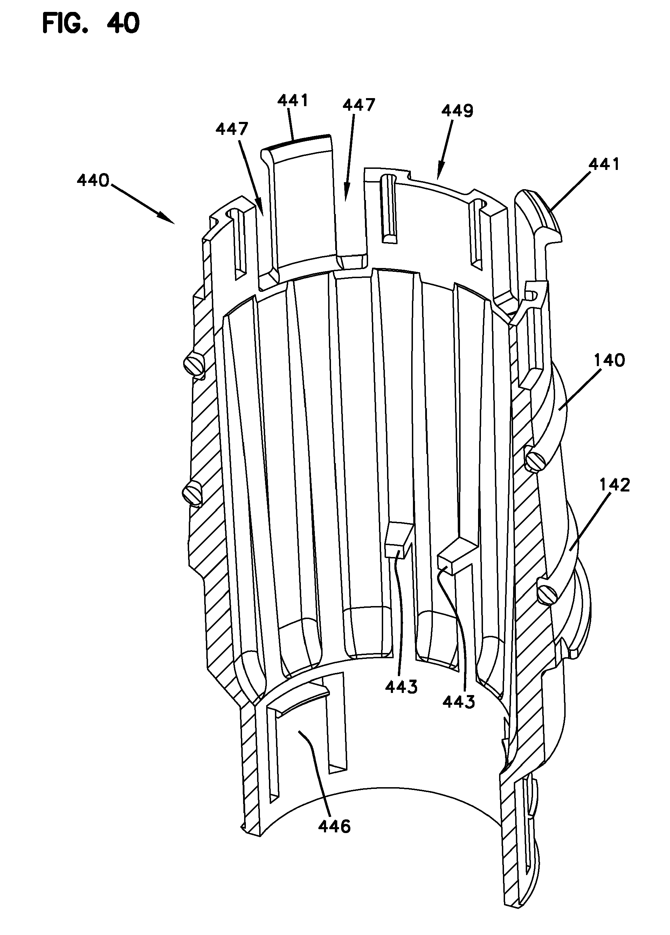

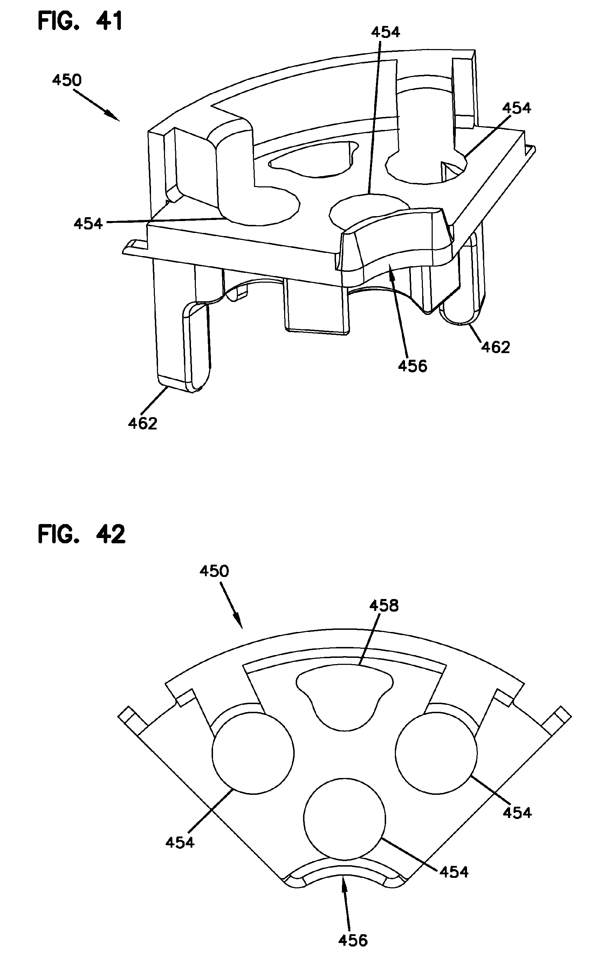

Referring now to FIGS. 36-42, an alternative sealing device 400 is shown. A lower tube holder 430 is received within housing 440 in a similar manner as lower tube holder 30 described above. Lower tube holder 430 is shown with an extension 434 which is broken off from main body 432. Extension 434 is discarded if twelve tubes are utilized. In the situation where seven tubes are used, extension 434 is used as a blocker over portions of holes 438 to cover five tube openings with plugs 436, thereby leaving room for seven tubes to pass through main body 432.

Housing 440 includes an upper end 442 with a plurality of snaps 441 for snapping to port 18, in a similar manner as described above. At a lower end 444 of housing 440, tabs 446 are provided for engaging duct 10. A ring 448 slid upwardly prevents outward flexing of tabs 446 once in the mounted position over duct 18.

Upper tube holder 450 is constructed in a similar manner as upper tube holder 50 above wherein each segment is a quarter section. Each segment includes tube openings 454, a central passage 456, and a vent hole 458. Upper tube holder 450 defines slots 452 for receipt of tabs 441 when upper tube holder 450 is positioned in upper end 442 of housing 440.

### Parts List

- 10: Duct
- 12: Corrugations
- 14: Tubes
- 16: Enclosure
- 18: Port
- 20: Cap
- 22: Tubular sleeve
- 24: Top edge
- 26: Resin pouring channel
- 28: Resin area
- 30: Lower tube holder
- 40: Housing
- 42: Snap
- 50: Upper tube holder
- 100: Sealing device
- 102: Body
- 104: First end
- 106: Second end
- 110: Tab
- 120: Slot
- 122: Detent
- 130: First upper slot
- 132: Second upper slot
- 134: Outer tab
- 140: Top seal
- 142: Bottom seal
- 148: Vertical slot
- 202: Base
- 204: Center post
- 206: Lower divider
- 208: Holes
- 210: Side arm
- 212: Side arm
- 214: Outer ring
- 220: Ramped
- 224: Notches
- 302: Base
- 304: Tube opening
- 316: Vent hole
- 320: Center passage
- 324: Center projections
- 330: First side projection
- 332: Second side projection
- 350: Upper tube holder
- 352: Base
- 360: Center passage
- 362: Center projection
- 370: Tube holes
- 372: Vent holes
- 380: First side projection
- 382: Second side projection
- 430: Lower tube holder
- 432: Main body
- 434: Blocker
- 436: Plug
- 438: Tube opening
- 440: Housing
- 441: Snap
- 442: First end
- 443: Support tab
- 444: Second end
- 446: Tab
- 447: First upper slot
- 448: Locking ring
- 449: Second upper slot
- 450: Upper tube holder
- 452: Slots
- 454: Tube openings
- 456: Central passage
- 458: Vent hole
- 462: First side projection
- 464: Second side projection

## Claims

1. A tube holder (50) for organizing tubes (14) extending into a port (18) of a telecommunications device comprising:
a base (302);
**characterized in that**:
the base defining a circular shaped periphery and openings (304) for receipt of the tubes (14);
the base (302) includes a vent opening (316);
the base (302) defines a center passage (320) for the passage of resin poured through the tube holder (50) into a housing (40) mounted around the tubes (14).

2. The tube holder of claim 1, wherein the base (302) is pie-shaped in that a plurality of bases combine generally form a circular element.

3. The tube holder of claim 2, wherein the base (302) is quarter shaped in that four bases combine generally form the circular element.

4. The tube holder of claims 1- 3, wherein the openings (304) are side openings for receipt of the tubes.

5. A method of using a tube holder (50) comprising:
providing a duct (10) having tubes (14) and a housing (40) mounted around the end of the duct (10) with the tubes (14) passing through the housing (40);
**characterized in that**:
positioning a tube holder (50) adjacent to an upper portion of the housing (40);
pouring resin through a center of the tube holder (50) around the tubes (14) within the housing.

6. The method of claim 5, wherein a base (302) of the tube holder (50) is pie-shaped in that a plurality of bases combine generally form a circular element.

7. The method of claim 6, wherein the base (302) is quarter shaped in that four bases combine generally form the circular element.

8. The method of claims 5-7, wherein the tubes (14) are side loaded into the tube holder (50).
